# EUROPÄISCHE PATENTANMELDUNG

(11) **EP 3 093 570 A1**
(43) Veröffentlichungstag der Anmeldung: **16.11.2016**
(21) Anmeldenummer: 16168943.5
(22) Anmeldetag: 10.05.2016
(51) Int. Cl.: F24F 11/00, G06K 9/00

(54) **HEIZUNGS-LÜFTUNGS-KLIMATECHNIK-SYSTEM**

(30) Priorität: 15.05.2015 DE 102015208960
(71) Anmelder: Vaillant GmbH, 42859 Remscheid (DE)
(72) Erfinder: Eichholtz, David, 44789 Bochum (DE); Krampe-Zadler, Christof, 44628 Herne (DE)
(74) Vertreter: Popp, Carsten

(57) **Zusammenfassung**

Die Erfindung betrifft ein Heizungs-Lüftungs-Klimatechnik-System, umfassend eine oder mehrere Sensorvorrichtungen (4, 41), zumindest eine Steuervorrichtung (8) zur Auswertung der Daten der Sensorvorrichtungen (4, 41) und zumindest eine Heizungs-, Lüftungs- und/oder Klimavorrichtung (11, 12, 13, 14, 15). Die Steuervorrichtung (8) ist so ausgestaltet, dass sie im Betrieb in Abhängigkeit der Daten der Sensorvorrichtung (4, 41) die Heizungs-, Lüftungs- und/oder Klimavorrichtung (11, 12, 13, 14, 15) ansteuert. Erfindungsgemäß umfasst zumindest eine Sensorvorrichtung (4, 41) mindestens einen visuellen Sensor (5) für eine Wellenlänge im sichtbaren und/oder im nahen Infrarot-Bereich mit einer Wellenlänge kleiner 1200 nm und mindestens einen bildgebenden Infrarot-Sensor (6) für eine Wellenlänge größer 1500 nm, bevorzugt größer 2500 nm.

## Beschreibung

Die Erfindung betrifft ein Heizungs-Lüftungs-Klimatechnik-System (HLK-System) zur Bereitstellung eines bedarfsgerechten Raumklimas.

Konventionelle HLK-Systeme steuern die Solltemperatur eines Wohngebäudes nach einem vorgegebenen Zeitprofil. So wird beispielsweise über Nacht und zu den üblichen Abwesenheitszeiten der Bewohner die Temperatur abgesenkt. Diese Systeme können jedoch nur den tatsächlichen Bedarf an Raumklima nur ungefähr decken. In der Regel werden bei der Auslegung dieser Systeme Komfortzuschläge eingerechnet, die zu einem höheren Energieverbrauch führen.

In der Patentschrift DE 10 2011 052 467 B4 wird vorgeschlagen, mithilfe eines intelligenten Stromzählers und mit Gebäudenutzer-Geodaten einen Gebäudenutzerzustand zu bestimmen und diese Daten für die Steuerung eines HLK-Systems zu verwenden.

In der Patentschrift DE 2008 050 444 B4 wird vorgeschlagen, sich im Raum aufhaltende Personen mittels Bilderkennung, Personenzählung durch Bewegungsmelder oder Identifikation mittels RFID-Transponder zu ermitteln und diese Werte für eine Belüftungsregelung eines Raumes zu verwenden.

Die Offenlegungsschrift DE 10 2013 201 750 A1 beschreibt die Erfassung von Gebäudenutzer-Geodaten mittels eines mobilen Endgeräts.

Die Patentschrift AT 413 059 B offenbart die Verwendung verschiedener Sensoren, insbesondere eines Video-Überwachungssystems, eines Geruchssensors, eines Raumluftfeuchte-Sensors oder eines Schallsensors zur Steuerung und Regelung der Haustechnik-Anlagen.

Aus der WO 2014/146046 A1 ist es bekannt, dass ein Haustechnik-System mit mehreren Sensoren und die Bewohner miteinander interagieren.

Nachteil der bekannten Systeme ist, dass die Sensoren die Position nur ungenau erfassen oder dass dieses mit einem hohen sensorischen Aufwand verbunden ist. So können entweder die Aufenthaltsorte von Personen nur auf einen Raum bezogen werden oder aber es ist ein hoher Aufwand bei der Auswertung der Sensordaten notwendig. So müssen beispielsweise für die Auswertung der Bildverarbeitungsdaten hohe Rechnerkapazitäten bereitgestellt werden. Dabei ist zu beachten, dass dieser Aufwand für jeden Raum erforderlich ist. Grundsätzlich besteht dabei die Schwierigkeit, dass sitzende oder liegende Personen schwierig zu erkennen sind. Ebenso können Menschen, Tiere und Gegenstände nicht zuverlässig unterschieden werden.

Es ist daher Aufgabe der Erfindung, ein HLK-System mit einem verbessertem Sensorsystem bereitzustellen, das bei einem vertretbaren wirtschaftlichen Aufwand ein gutes Ergebnis hinsichtlich der Positionsbestimmung von Personen im Raum, des Raumzustandes und des Personenzustands erzielt. Eine weitere Aufgabe der Erfindung ist es, das HLK-System noch besser an den tatsächlichen Bedarf an Wärme, Kälte und/oder Lüftung anzupassen.

Diese Aufgabe wird gemäß den Merkmalen des Anspruchs 1 dadurch gelöst, dass ein bildgebender Sensor, der im sichtbaren Lichtspektrum oder nahen Infrarotbereich arbeitet, ergänzt wird um einen hochauflösenden Sensor im mittleren bis fernen Infrarotbereich. Dabei ist das sichtbare Lichtspektrum und der nahe Infrarotbereich im Sinne der Erfindung definiert durch eine Wellenlänge kleiner 1200 nm.

Diese Kombination ist besonders vorteilhaft, da in vorteilhafter Weise die Informationen des visuellen Sensors, der ein Abbild des Wohnraums liefert, ergänzt wird um die Informationen des bildgebenden Infrarot Sensors. Es sind zwar auch Wärmebildkameras bekannt, die vergleichbare Informationen wie die erfindungsgemäße Kombination liefern, die jedoch in der Anschaffung sehr teuer sind. Andererseits hat die erfindungsgemäße Kombination gegenüber einer Kombination aus einem visuellen Sensor und beispielsweise einem Bewegungsmelder den Vorteil, dass die Position eines Infrarotstrahlung emittierenden Objekts mit einer durch den visuellen Sensor erfassten Position korreliert werden kann. Die Sensorvorrichtung wird erfindungsgemäß in mindestens einem Raum eingesetzt, bevorzugt in jedem regelmäßig bewohnten Raum, beispielsweise im Wohnzimmer. Weitere erfindungsgemäße Sensorvorrichtungen können beispielsweise in Kinderzimmern, Esszimmern etc. vorgesehen sein. Die Daten der Sensorvorrichtungen werden genutzt, um die Heizung, die Lüftung oder die Klimatisierung des jeweiligen Raums anzusteuern.

Um die bildgebende Auflösung zu erreichen, wird für den bildgebenden Infrarot-Sensor ein matrixförmiger Sensor mit einer Auflösung von mindestens 8 mal 8, bevorzugt mindestens 50 mal 50 verwendet. Dabei ist ein Kompromiss zwischen Auflösung und Kosten zu finden. Andererseits ist für kleine, nicht verwinkelte Räume mit wenig freistehenden Möbeln eine geringe Auflösung ausreichend. Alternativ kann der bildgebende Infrarot-Sensor einen scannender Sensor mit mindestens 8, bevorzugt mindestens 50 Linien sein, der den Raum ähnlich wie bei einer Kathodenstrahlröhre zeilenweise abscannt oder der aus einem Liniensensor oder einem niedrig auflösenden Matrixsensor besteht, der in einer Richtung quer zur sensierten Linie verfahren wird. Als weitere Alternative kommt erfindungsgemäß ein nachgeführter Sensor in Betracht, welcher nur einen Punkt oder aber in mehreren wenigen Punkten auflöst, dabei aber in 2 Achsen ausgerichtet werden kann. Dadurch ist es möglich, ein vom visuellen Sensor mutmaßlich erkanntes Objekt anzuvisieren und die emittierte Infrarotstrahlung dieses Objekts gezielt zu messen.

Bevorzugt ist bei der Sensorvorrichtung der visuelle Sensor und der bildgebende Infrarot-Sensor in einer Baueinheit vorgesehen. Dies hat den Vorteil, dass die Sensoreinheit einfach zu montieren ist und der visuelle Sensor und der bildgebende Infrarot-Sensor ein Abbild mit gleicher Perspektive liefern. Alternativ ist es auch möglich, dass die Sensorvorrichtung mehrere visuelle Sensoren und/oder mehrere bildgebende Infrarot-Sensoren umfasst, die in räumlich getrennten Baueinheit vorgesehen sind. Dadurch ist es möglich, ein dreidimensionales Abbild des Wohnraums zu erfassen. Durch die Aufnahme mit einem zweiten Sensor aus einer anderen Perspektive wird die sonst fehlende TiefenInformation gewonnen.

In einem erfindungsgemäßen Verfahren zum Betreiben eines Heizungs-Lüftungs-Klimatechnik-Systems mit den Merkmalen der Vorrichtungsansprüche wird ein zwei- oder dreidimensionales Raumabbild von dem visuellen Sensor mit dem des bildgebenden Sensors überlagert und daraus unter Verwendung von dem Fachmann grundsätzlich bekannten Bildverarbeitungsalgorithmen Informationen über den Raumnutzungszustand gewonnen, wobei der Raumnutzungszustand durch die Anzahl und die Position von Personen definiert wird. Weitere dabei gewonnene Zusatz-Informationen zum Status der Personen, zum Beispiel über die Oberflächentemperatur der Personen und über die Bewegungsgeschwindigkeit können ebenfalls erfasst und ausgewertet werden. So kann beispielsweise bei einer größeren Anzahl von Personen, die sich viel bewegen, eine niedrigere Raumtemperatur angesetzt werden, als Personen, die sich in Ruhe befinden. Weiterhin kann beispielsweise eine niedrige Hauttemperatur der Personen darauf hinweisen, dass die Person friert und daher die Raumtemperatur erhöht werden muss.

Alternativ dazu wird in einem alternativen erfindungsgemäßen Verfahren zuerst von jedem oder von einer Gruppe von Sensoren ein Teil-Raumabbild erstellt und danach die Teil-Raumabbilder zu einem Raumabbild überlagert.

In einer bevorzugten Variante des erfindungsgemäßen Verfahrens werden zusätzlich externe Wärmequellen oder -senken durch das Heizungs-Lüftungs-Klimatechnik-System erfasst. Dies könnte beispielsweise ein heißes Bügeleisen oder ein geöffnetes Fenster sein. Diese können dann beim Ermitteln der dem Raum zuzuführenden Wärmemenge mit berücksichtigt werden.

In einer weiteren vorteilhaften Variante des erfindungsgemäßen Verfahrens wird die geförderte Luftmenge des Lüftungssystems des Heizungs-Lüftungs-Klimatechnik-Systems in Abhängigkeit von der Anzahl und der Bewegungsgeschwindigkeit der Personen im Raum gesteuert. So wird aus Gründen der Lärmvermeidung bei einer einzelnen sitzenden Person ein niedriger Luftmassenstrom und bei vielen Personen im Raum, die sich bewegen, ein hoher Luftmassenstrom gewählt. Alternativ oder ergänzend kann die Steuerungsvorrichtung mit einem Schallpegelsensor verbunden sein, das den vorhandenen Schallpegel im Raum misst und den Luftmassenstrom in Abhängigkeit vom Schallpegel so einstellt, dass bei hohen Lautstärken im Raum auch ein höherer Luftmassenstrom zugelassen wird.

In einer vorteilhaften Weiterbildung des erfindungsgemäßen Verfahrens wird die Temperatur der Hautoberflächen und/oder die Temperatur der Bekleidungsoberflächen erfasst. Die Temperatur der Hautoberflächen ist ein Kennzeichen dafür, ob die Personen frieren oder ob ihnen warm ist. Erfindungsgemäß wird die Raumtemperatur den empfinden der Personen angepasst. Im Sinne der Erfindung wird die Temperatur der Hautoberflächen am Gesicht und/oder den Händen erfasst. Die Temperatur der Bekleidungsoberflächen deutet darauf hin, ob die Personen warm angezogen oder leicht bekleidet sind. Auch hier wird erfindungsgemäß die Raumtemperatur der Bekleidung der Personen angepasst. Im Sinne der Erfindung wird die Temperatur der Bekleidungsoberflächen an Körperteilen erfasst, die üblicherweise bekleidet sind, unabhängig davon, ob sie tatsächlich bekleidet sind. Dadurch kann zum Beispiel das Tragen eines kurzärmligen Hemdes anhand der Temperatur der Unterarme erkannt werden, ohne dass die Steuervorrichtung die tatsächlich getragene Kleidung erkennen muss. In vorteilhafter Weise wird Temperatur der Hautoberflächen eine höhere Priorität zugemessen als der der Bekleidungsoberflächen, da sie das tatsächliche Temperatur-Empfinden der Person besser repräsentiert. Durch die Erfassung der Temperatur der Haut- und/oder der Bekleidungsoberflächen wird vorteilhaft erreicht, dass die Raumtemperatur oder Eingriffe der Bewohner den jeweiligen Bedürfnissen komfortabel angepasst wird.

Die Erfindung wird nun anhand der Figuren detailliert erläutert. Es stellen dar:
Figur 1: Einen Wohnraum mit einem erfindungsgemäßen Heizungs-Lüftungs-Klimatechnik-System,
Figur 2: Einen Wohnraum mit einem erfindungsgemäßen Heizungs-Lüftungs-Klimatechnik-System mit alternativer Anordnung der Sensorvorrichtung 4.

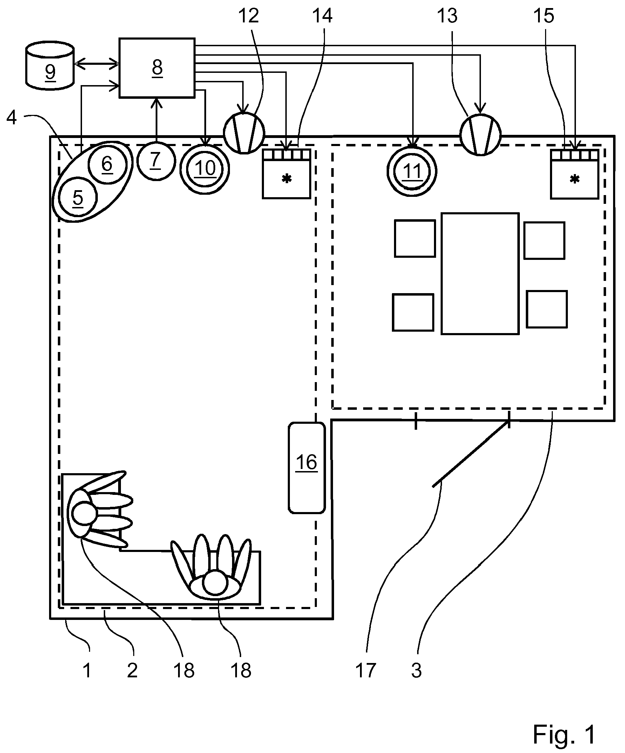

Figur 1 zeigt einen Wohnraum mit einem erfindungsgemäßen Heizungs-Lüftungs-Klimatechnik-System. Der dargestellte Wohnraum 1 ist Teil einer Wohnung oder eines Hauses, wobei auch andere Wohnräume der Wohnung oder des Hauses mit Sensoren ausgestattet sind und mit dem erfindungsgemäßen Heizungs-Lüftungs-Klimatechnik-System verbunden sind. Der Wohnraum 1 ist optional in zwei Zonen 2, 3 unterteilt. In diesem Fall ist die Zone 2 ein Wohnbereich und die Zone 3 ein Essbereich. Der Wohnraum 1 umfasst eine Sensorvorrichtung 4, welche einen visuellen Sensor 5 und einen bildgebenden Infrarot-Sensor 6 umfasst. Der visuelle Sensor 5 ist beispielsweise eine Kamera, die im sichtbaren oder im nahen Infrarotbereich arbeitet. Hierfür stehen im Markt preisgünstige hochauflösende Bildsensoren zur Verfügung, die bis in den nahen Infrarotbereich Bildinformationen aufnehmen können. Zusätzlich ist ein bildgebender Infrarot-Sensor 6 vorhanden, der die Bildinformationen des visuellen Sensors 5 um Informationen, die im langwelligeren Infrarotbereich erfasst werden, ergänzt. Der bildgebende Infrarot-Sensor 6 löst einerseits so hoch auf, dass einzelne Objekte im Raum aufgelöst werden können. Dies ist beispielsweise der Fall, wenn der bildgebende Infrarot-Sensor 6 im Fall eines matrixförmigen Sensors mindestens 8 mal 8 Bildpunkte auflöst. Dies reicht bereits aus, um zusammen mit den Daten des visuellen Sensors 5 Informationen über die Position und die Anzahl von Infrarotstrahlung emittierenden Objekten zu gewinnen. Bevorzugt ist die Auflösung des bildgebenden Infrarot-Sensors 6 höher, im Fall eines matrixförmigen Sensors mindestens 50 mal 50 Bildpunkte. Die Obergrenze der Auflösung ist jedoch andererseits durch die Kosten für den bildgebenden Infrarot-Sensor wirtschaftlich limitiert. Ebenfalls denkbar ist ein scannender bildgebender Infrarot-Sensor 6 mit mindestens 8, bevorzugt mindestens 50 Linien, der den Raumzeilen förmig abgetastet. Weiterhin ist ein nachgeführter punktförmig sensierender oder niedrig matrixförmig auflösender Infrarot-Sensor 6 erfindungsgemäß eingeschlossen, der mittels Aktoren in horizontaler und vertikaler Richtung ausgerichtet werden kann.

Der visuelle Sensor 5 und der bildgebende Infrarot-Sensor 6 sind in einer Sensorvorrichtung 4 integriert. Die Sensorvorrichtung 4 ist mit einer Steuervorrichtung 8 verbunden, die die Bildinformationen der Sensorvorrichtung 4 auswertet. Dabei kann einerseits die Bildverarbeitung oder eine Bildvorverarbeitung bereits innerhalb der Sensorvorrichtung 4 erfolgen, so dass der Steuervorrichtung 8 ausgewertete oder vor verarbeitete Informationen zur Verfügung gestellt werden. Andererseits können auch die Bildrohdaten der Steuervorrichtung 8 zur Verfügung gestellt werden, die dann die Auswertung vornimmt.

Die Steuervorrichtung 8 ist bevorzugt ebenfalls verbunden mit einem oder mehreren Sensorsystemen 7, die die Temperatur, die Lautstärke, die Luftqualität (z.B. CO₂-Gehalt, VOC), die relative Luftfeuchtigkeit oder andere Raumdaten erfassen. In Abhängigkeit von den Messwerten der Sensoren 5, 6 und dem Sensorsystem 7 werden Heizgeräte 10, 11, Lüftungsgeräte 12, 13 oder Klimageräte 14, 15 von der Steuervorrichtung 8 nach einem vorgegebenen Programm angesteuert.

In dem Beispiel in Figur 1 halten sich 2 Personen 18 ruhend in der ersten Zone (Wohnbereich) auf. Die Sensorvorrichtung 4 erfasst die Personen 18 aufgrund des Bildes des visuellen Sensors 5 und der vom bildgebenden Infrarot-Sensor 6 erfassten Daten. Durch die Kombination der Sensoren 5 und 6 ist es möglich, Personen zuverlässig von anderen Gegenständen zu unterscheiden. So würde bei einer Erfassung nur über einen visuellen Sensor 5 beispielsweise ein über einen Stuhl gehängt der Mantel fälschlicherweise als sitzende Person erkannt. Andererseits würde eine auf dem Sofa liegende Person nicht richtig erkannt werden. Die Auflösung des bildgebenden Infrarot-Sensors 6 ist hinreichend groß, um die beiden auf dem Sofa sitzenden Personen 18 anhand ihrer Infrarot-Emissionen zu erkennen. Die Steuervorrichtung 8 stellt das erste Heizgerät 10 oder das erste Klimagerät 14 so ein, dass die gewünschte Raumtemperatur erreicht wird. Der Vorteil des erfindungsgemäßen Heizungs-Lüftungs-Klimatechnik-Systems ist, dass die gewünschte Raumtemperatur dynamisch anhand der aktuellen Raumnutzung festgelegt werden kann. Im Fall der beiden sitzenden Personen kann die Steuervorrichtung 8 so konfiguriert werden, dass eine leicht erhöhte Temperatur eingestellt wird. Wäre keine Person im Raum oder würde sich eine oder mehrere Personen bewegen, könnte die Temperatur niedriger eingestellt werden. Durch die Unterteilung des Wohnraums 1 in zwei Zonen 2, 3 ist es möglich, die einzelnen Zonen individuell zu beheizen, kühlen oder zu belüften. In dem in Figur 1 gezeigten Fall könnte beispielsweise nur die erste Zone 2 mittels des ersten Heizgeräts 10 beheizt werden, während das Heizgerät 11 in der zweiten Zone 3 nicht oder mit geringerer Leistung betrieben wird. Entsprechendes gilt für das Klimagerät 14 oder 15. Die Heizgeräte 10, 11 können beispielsweise Radiatoren, Fußbodenheizungen oder andere Niedertemperatur-Flächenheizungen in Form von Decken- oder Wandheizungen sein. Diese können beispielsweise als so genannte Heiztapeten ausgeführt sein, die in Form einer dünnen großflächigen elektrischen Heizung die Decke oder die Wände bedecken. Der Vorteil dieser Flächenheizungen ist, dass sie eine hohe Dynamik aufweisen so dass bei wechselnden Wohnraumnutzungen Änderungen der Beheizung schnell vorgenommen werden können.

Der bildgebende Infrarot-Sensor 6 ist ebenfalls in der Lage, externe Wärmequellen 16 oder externe Wärmesenken 17 zu erkennen. So können beispielsweise die abgegebenen Wärmeleistungen der Personen 18 und der externen Wärmequelle 16 bei der zuzuführenden Wärme durch die Heizgeräte 10, 11 berücksichtigt werden. Eine externe Wärmesenken 17 kann beispielsweise ein geöffnetes Fenster sein. Eine externe Wärmequellen 16 kann ein elektrisch betriebenes Gerät wie ein Fernseher oder ein Bügeleisen sein.

Die Steuervorrichtung 8 berücksichtigt bei der Ermittlung der Soll-Raumtemperaturen ebenfalls die Wetterlage in Form der durch ein Fenster ein strahlenden Sonnenwärme, die als externe Wärmequelle 16 berücksichtigt wird, sowie die Jahreszeit, die auf das Temperaturempfinden der Personen 18 Einfluss hat.

Durch die Sensoren 5, 6 und die Sensorvorrichtung 7 erfasst die Steuervorrichtung 8 Zustände, die auf z.B. Einbruch oder Fehlfunktionen, beispielsweise ein überhitztes Gerät mit Brandgefahr, außer Kontrolle geratener Kamin, oder Fehlbedienungen, beispielsweise vergessenes geöffnetes Fenster während der Heizperiode, versehentlich eingeschalteter Herd etc. hinweisen und meldet diese. Ebenso unterscheiden die Sensoren (5, 6) Menschen und Haustiere.

Weiterhin erfasst die Steuervorrichtung 8 den Status von potenziell hilflosen Personen. Dies wird zur Überwachung von Kindern sowie für ein geriatrisches Monitoring genutzt. So wird beispielsweise ein rufendes Kind oder eine am Boden liegende hilflose Person erkannt und über eine hier nicht dargestellte Verbindung einen Alarm abgegeben. Ebenso kann eine hilfebedürftige Personen über Gesten den Alarm auslösen.

Die Steuervorrichtung 8 ist mit einer Datenspeichervorrichtung 9 verbunden, die Nutzungs-Gewohnheiten des Wohnraums durch die Personen 18 speichert. Dies kann eine Datenbank, ein neuronales Netz oder ein Fuzzy-Regler sein. Damit werden regelmäßige Anwesenheits-und Abwesenheitszeiten oder Gewohnheiten der Personen gespeichert. Dies können zum Beispiel Informationen sein, dass der Wohnraum montags bis freitags zwischen 8:00 und 17:00 Uhr nicht genutzt wird. Weitere in der Datenspeichervorrichtung gespeicherte Informationen können sein, dass beispielsweise abends um 19:00 Uhr die Personen 18 üblicherweise am Esstisch in der zweiten Zone 3 sitzen. Diese in der Datenspeichervorrichtung 9 gespeicherten Informationen werden erfindungsgemäß genutzt, um in dem letztgenannten Beispiel die zweite Zone 3 vorab zu beheizen. Die in der Datenspeichervorrichtung 9 gespeicherten Informationen werden erfindungsgemäß im Laufe der Nutzung des Heizungs-Lüftungs-Klimatechnik-Systems erfasst, maschinell gelernt und in Form eines Regelsatzes in der Datenspeichervorrichtung 9 abgelegt.

Die Lüftungsgeräte 12, 13 werden ebenfalls nach einem in der Steuervorrichtung 8 vorgegebenen Programm betrieben. Dabei werden auch die Daten des Sensorsystems 7 genutzt, um beispielsweise wie aus dem Stand der Technik bekannt den Luftmassenstrom der Lüftungsgeräte 12, 13 in Abhängigkeit von der Luftqualität oder der relativen Luftfeuchtigkeit zu steuern. Darüber hinaus kann das Sensorsystem 7 auch einen Schallpegelsensor umfassen, so dass beispielsweise bei anwesenden Personen und Ruhe ein geringerer Luftmassenstrom gewählt wird. Dabei kann auch die aus den Lüftungsgeräten 12, 13 ausströmende Luft zusätzlich oder alternativ zu den Heizgeräten 10, 11 und Klimageräten 14, 15 beheizt oder gekühlt werden

Die Daten der Sensoren (5, 6) werden ebenfalls genutzt, um zusammen mit einem vom Sensorsystem 7 umfassten Sensor für relative Luftfeuchte Taupunktgefährdete Bereiche zu erfassen und gegebenenfalls den Luftmassenstrom der Lüftungsgeräte 12, 13 zu erhöhen.

Eine weitere in der Steuervorrichtung 8 realisierte Funktion berücksichtigt auch die Oberflächentemperatur der Haut der Personen 18. Diese kann durch den bildgebenden Infrarot-Sensor 6 erfasst werden. So kann beispielsweise eine zu niedrige Oberflächentemperatur der Haut ein Hinweis darauf sein, dass die Personen 18 friert. Dadurch ist es möglich, dass die Steuervorrichtung die Temperatur im Raum erhöht, ohne dass diese Person dazu aktiv werden muss. Dies hat den Vorteil eines höheren Wohnkomforts. Andererseits wird vermieden, dass es vergessen wird, die Temperaturerhöhung wieder zurückzunehmen. Ebenfalls kann erfasst werden, ob die anwesenden Personen 18 warm angezogen sind oder leicht bekleidet sind. Dies wird erfindungsgemäß von der Hautoberflächentemperatur unterschieden. Erfindungsgemäß wird bei warm angezogenem Personen während der Heizperiode die Raumtemperatur gesenkt bzw. bei leicht bekleideten Personen während der Heizperiode die Raumtemperatur erhöht.

Der Wohnraum 1 ist einer von mehreren bewohnten Räumen in einer Wohnung oder einem Haus. Dabei können entweder alle Räume mit einer gemeinsamen Steuervorrichtung 8 verbunden sein oder jeweils eine eigene Steuervorrichtung 8 aufweisen, die entweder unabhängig voneinander arbeiten oder durch eine übergeordnete Steuervorrichtung koordiniert werden.

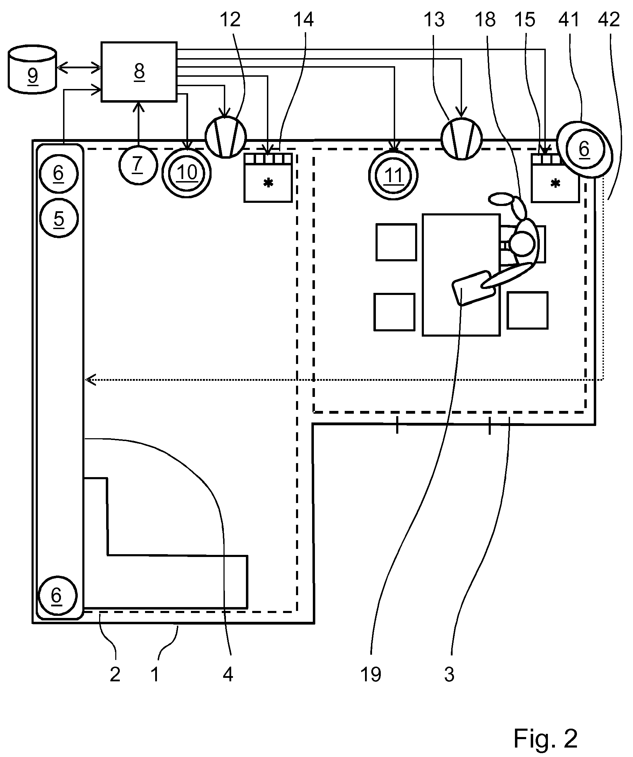

In Figur 2 ist eine von Figur 1 abweichende Sensorvorrichtung 4 sowie eine andere Nutzung des Wohnraums 1 dargestellt. Nachfolgend werden nur die Unterschiede zu dem Ausführungsbeispiel in Figur 1 beschrieben.

Die Sensorvorrichtung 4 wird ergänzt durch weitere Sensorvorrichtung 41 in der anderen Zone. Dabei ist in dem Ausführungsbeispiel der visuellen Sensor 5 zusammen mit einem bildgebenden Infrarot-Sensor 6 sowie einem räumlich getrennten zusätzlichen bildgebenden Infrarot-Sensor 6 in der Sensorvorrichtung 4 vereint. Die Sensorvorrichtung 4 ist in diesem Fall nicht als ein die Sensoren 5, 6 umfassendes Gehäuse aufzufassen, sondern als logische Einheit, die in diesem Beispiel zwei Gehäuse umfasst, die die Sensoren 5, 6 und den Sensor 6 umfassen. Durch die drahtgebundene oder drahtlose Verbindung 42 werden die Daten der Sensoren 5, 6 zusammengeführt. Dabei kann wiederum auch in der Sensorvorrichtung 41 eine Vorverarbeitung der durch den Sensor 6 erfassten Daten erfolgen, die Verarbeitung der Daten kann gemeinsam in der Sensorvorrichtung 4 erfolgen oder wie zu Figur 1 beschrieben kann die gesamte Verarbeitung der Daten der Sensoren 5, 6 innerhalb der Steuervorrichtung 8 erfolgen. Die in Figur 2 dargestellte Anordnung der Sensoren, 5, 6 ist nur beispielhaft. So kann auch der visuelle Sensor 5 alleine in der Sensorvorrichtung 4 vorgesehen sein. Ebenfalls können mehrere visuelle Sensoren 5 und mehrere Sensorvorrichtungen 41 vorgesehen sein.

Der Vorteil der hier dargestellten Anordnung ist, dass ein dreidimensionales Abbild der bildgebenden Infrarot-Sensoren 6 erzeugt werden kann. So kann zusätzlich zu dem zweidimensionalen Abbild des bildgebenden Infrarot-Sensors 6 in der Sensorvorrichtung 4 mit Hilfe des in der ersten Zone 2 vorgesehenen bildgebenden Infrarot-Sensors 6 bzw. des in der zweiten Zone 3 vorgesehenen bildgebenden Infrarot-Sensors 6 eine Tiefeninformation gewonnen werden und zu einem dreidimensionalen Abbild zusammengeführt werden. So ist es beispielsweise möglich, dass bei einem matrixförmigen bildgebenden Infrarot-Sensor 6 mit einer Auflösung von 8 mal 8 Bildpunkten ein Infrarot emittierendes Objekt in Form der Personen 18 erfasst und einem oder mehreren der Bildpunkte zugeordnet wird. Zusätzlich erfasst der bildgebende Infrarot-Sensor 6 in der zweiten Zone 3 senkrecht dazu ebenfalls die Person 18 und ordnet diese ebenfalls einem oder mehreren der Bildpunkte zu. Durch die entweder in den Sensorvorrichtung 4, 41 oder in der Steuervorrichtung 8 vorgenommene Bildverarbeitung werden die Bilder korreliert und die dreidimensionale Position der Person 18 bestimmt.

Weiterhin ist in Figur 2 eine andere Nutzung des Wohnraums 1 dargestellt. In diesem Fall hält sich eine Person in der zweiten Zone 3 auf. Dies hat zur Folge, dass die erste Zone 2 beispielsweise nicht geheizt oder gekühlt werden muss, dafür jedoch die zweite Zone 3.

Weiterhin ist dargestellt, dass die Person 18 den rechten Arm erhebt. Dies wird ebenfalls von den Sensoren 5, 6 erfasst. Ein Steuerprogramm in der Steuervorrichtung 8 wertet die Bewegungen der erfassten Personen 18 aus und identifiziert Gesten, mit denen die Steuervorrichtung bedient werden kann. So können beispielsweise Gesten für die Erhöhung oder Senkung der Temperatur und oder des Luftmassenstroms der Lüftungsgeräte 12, 13 vereinbart werden. Erfindungsgemäß wird durch eine hier nicht dargestellte Signaleinheit eine Rückmeldung an den Bewohner in Form eines optischen und/oder akustischen Signals über den Erfolg der Gestenerkennung gegeben. Alternativ zur Bedienung per Gestenerkennung ist eine Bedienung per Spracherkennung mit Hilfe des Schallpegelsensors im Sensorsystem 7 oder mittels einer Kommunikation über ein drahtloses oder drahtgebundenes Bediengerät 19 vorgesehen.

Das erfindungsgemäße Heizungs-Lüftungs-Klimatechnik-System hat optional eine nicht dargestellte Anbindung zu einem Hausautomationssystem, welches beispielsweise die Steuerung von Jalousien und einen Alarmsystem umfasst. Ebenso hat das erfindungsgemäße Heizungs-Lüftungs-Klimatechnik-System optional eine nicht dargestellte Anbindung zu einem aus dem Stand der Technik bekannten Energiemanagement-System.

Zur Inbetriebnahme wird das System von einem Handwerker installiert und grundlegende Parameter wie die Topographie des Wohnraums 1 in Form seiner Abmessungen und der Position von Möbeln und der Anzahl und Position von Sensoren sowie eine Grundeinstellung für die Ansteuerung der Heizungs-, Lüftungs- und/oder Klimavorrichtung 11, 12, 13, 14, 15 vorgenommen. Ebenfalls können vorab Zeiten, in denen die Personen 18 nicht anwesend sind, vorgegeben werden. Hierzu kann ein Bediengerät 19 genutzt werden.

Das erfindungsgemäße Heizungs-Lüftungs-Klimatechnik-System ist durch die Nutzung der Personen 18 selbstlernend. Durch die oben genannten Möglichkeiten der Kommunikation der Personen 18 mit der Steuervorrichtung 8 können der Steuervorrichtung 8 Korrekturdaten eingegeben werden. Ebenso ist es beispielsweise möglich, über das Bediengerät 19 zu Beginn der Nutzung oder auch später während der Nutzung in Form eines Fragebogens oder Dialogs Parameter zu ändern.

### Bezugszeichenliste

- 1: Wohnraum
- 2: Erste Zone
- 3: Zweite Zone
- 4: Sensorvorrichtung
- 5: Visueller Sensor
- 6: Bildgebender Infrarot-Sensor
- 7: Sensorsystem
- 8: Steuervorrichtung
- 9: Datenspeichervorrichtung
- 10: Erstes Heizgerät
- 11: Zweites Heizgerät
- 12: Erstes Lüftungsgerät
- 13: Zweites Lüftungsgerät
- 14: Erstes Klimagerät
- 16: Externe Wärmequelle
- 17: Externe Wärmesenke
- 18: Person
- 19: Bediengerät
- 41: Sensorvorrichtung
- 42: Verbindung

## Patentansprüche

1. Heizungs-Lüftungs-Klimatechnik-System, umfassend eine oder mehrere Sensor-vorrichtungen (4, 41), zumindest eine Steuervorrichtung (8) zur Auswertung der Daten der Sensorvorrichtung (4, 41) und zumindest eine Heizungs-, Lüftungs- und/oder Klimavorrichtung, (11, 12, 13, 14, 15) wobei die Steuervorrichtung (8) so ausgestaltet ist, dass sie im Betrieb in Abhängigkeit der Daten der Sensorvorrichtung (4, 41) die Heizungs-, Lüftungs- und/oder Klimavorrichtung (11, 12, 13, 14, 15) ansteuert, **dadurch gekennzeichnet, dass** zumindest eine Sensorvorrichtung (4, 41) mindestens einen visuellen Sensor (5) für eine Wellenlänge im sichtbaren und/oder im nahen Infrarot-Bereich mit einer Wellenlänge kleiner 1200 nm und mindestens einen bildgebenden Infrarot-Sensor (6) für eine Wellenlänge größer 1500 nm, bevorzugt größer 2500 nm umfasst.

2. Heizungs-Lüftungs-Klimatechnik-System nach Anspruch 1, **dadurch gekennzeichnet, dass** der bildgebende Infrarot-Sensor (6) ein matrixförmigen Sensor mit einer Auflösung von mindestens 8 mal 8, bevorzugt mindestens 50 mal 50 Bildpunkten ist.

3. Heizungs-Lüftungs-Klimatechnik-System nach Anspruch 1, **dadurch gekennzeichnet, dass** der bildgebende Infrarot-Sensor (6) ein scannender Sensor mit einer Auflösung von mindestens 8, bevorzugt mindestens 50 Linien ist.

4. Heizungs-Lüftungs-Klimatechnik-System nach Anspruch 1, **dadurch gekennzeichnet, dass** der bildgebende Infrarot-Sensor (6) ein nachgeführter Sensor ist.

5. Heizungs-Lüftungs-Klimatechnik-System nach einem der Ansprüche 1 bis 4, **dadurch gekennzeichnet, dass** bei der Sensorvorrichtung (4, 41) der visuellen Sensor und der bildgebende Infrarot-Sensor in einer Baueinheit vorgesehen sind.

6. Heizungs-Lüftungs-Klimatechnik-System nach einem der Ansprüche 1 bis 4, **dadurch gekennzeichnet, dass** bei der Sensorvorrichtung (4, 41) der oder die visuellen Sensoren und/oder der oder die bildgebenden Infrarot-Sensoren in getrennten Baueinheiten vorgesehen sind.

7. Heizungs-Lüftungs-Klimatechnik-System nach Anspruch 6, **dadurch gekennzeichnet, dass** zumindest zwei bildgebenden Infrarot-Sensoren (6) in getrennten Baueinheiten so angeordnet sind, dass ein dreidimensionales Abbild der Wärmequellen erkennbar ist.

8. Heizungs-Lüftungs-Klimatechnik-System nach einem der vorhergehenden Ansprüche, **dadurch gekennzeichnet, dass** das Heizungs-Lüftungs-Klimatechnik-System für zumindest einen Raum mehrere Zonen (2, 3) umfasst, die in Abhängigkeit Betrieb in Abhängigkeit von den Daten der Sensorvorrichtung individuell beheizbar, belüftbar und/oder klimatisierbar sind.

9. Verfahren zum Betreiben eines Heizungs-Lüftungs-Klimatechnik-Systems nach einem der Ansprüche 1 bis 8, umfassend die Schritte
Sensieren eines Raumnutzungszustands mit Sensoren (5, 6)
Ermitteln und Ausgeben von Stellgrößen für die Heizungs-, Lüftungs- und/oder Klimavorrichtung (10, 11, 12, 13, 14, 15) anhand des Raumnutzungszustands mittels der Steuervorrichtung (8),
**dadurch gekennzeichnet, dass** der Schritt Sensieren eines Raumnutzungszustands die Unterschritte
- Aufnehmen des Raumabbilds mit dem visuellen Sensor (5) und dem bildgebenden Infrarot-Sensor (6),
- Überlagern des Raumabbilds des visuellen Sensors (5) mit dem des bildgebenden Infrarot-Sensors (6),
- Auswerten des überlagerten Raumabbilds zur Gewinnung des Raumnutzungszustands
umfasst, wobei der Raumnutzungszustand Informationen über die Anzahl, den Aufenthaltsort und den Status von Personen (18) enthält.

10. Verfahren zum Betreiben eines Heizungs-Lüftungs-Klimatechnik-Systems nach einem der Ansprüche 1 bis 4 oder 6 bis 8, umfassend die Schritte
Sensieren eines Raumnutzungszustands
Ermitteln und Ausgeben von Stellgrößen für Heizungs-, Lüftungs- und/oder Klimavorrichtung (10, 11, 12, 13, 14, 15) anhand des Raumnutzungszustands mittels der Steuervorrichtung (8),
**dadurch gekennzeichnet, dass** der Schritt Sensieren eines Raumnutzungszustands die Unterschritte
- Aufnehmen und Auswerten jeweils eines Teil-Raumabbilds mit zumindest einem visuellen Sensor (5),
- Aufnehmen und Auswerten jeweils eines Teil-Raumabbilds mit zumindest einem bildgebenden Infrarot-Sensor (6),
- Überlagern der Teil-Raumabbilder zu einem Raumabbild,
- Auswerten des Raumabbilds zur Gewinnung des Raumnutzungszustands umfasst, wobei der Raumnutzungszustand Informationen über die Anzahl, den Aufenthaltsort von Personen (18) enthält.

11. Verfahren zum Betreiben eines Heizungs-Lüftungs-Klimatechnik-Systems nach Anspruch 9 oder 10, **dadurch gekennzeichnet, dass** der Raumnutzungszustand Informationen über die Anzahl und/oder die Intensität und/oder den Ort von nicht vom Heizungs-Lüftungs-Klimatechnik-System umfassten sonstigen Wärmequellen (16) und/oder Wärmesenken (17) enthält und dass die sonstigen Wärmequellen und/oder-senken bei der Ermittlung der dem Raum zuzuführenden oder abzuführenden Wärmemenge berücksichtigt werden.

12. Verfahren zum Betreiben eines Heizungs-Lüftungs-Klimatechnik-Systems nach einem der Ansprüche 9 bis 11, **dadurch gekennzeichnet, dass** die geförderte Luftmenge des Lüftungssystems (12, 13) in Abhängigkeit mit der von der Anzahl und der Bewegungsgeschwindigkeit der Personen so gesteuert wird, dass mit zunehmender Personenzahl und zunehmender Bewegungsgeschwindigkeit eine höhere Luftmenge gefördert wird.

13. Verfahren zum Betreiben eines Heizungs-Lüftungs-Klimatechnik-Systems nach einem der Ansprüche 9 bis 12, **dadurch gekennzeichnet, dass** die Steuerungsvorrichtung mit einem einen Schallpegelsensor umfassenden Sensorsystem (7) verbunden ist und dass die geförderte Luftmenge des Lüftungssystems in Abhängigkeit von dem Schallpegel so gesteuert wird, dass mit abnehmendem Schallpegel eine niedrigere Luftmenge gefördert wird.

14. Verfahren zum Betreiben eines Heizungs-Lüftungs-Klimatechnik-Systems nach einem der Ansprüche 9 bis 13, **dadurch gekennzeichnet, dass** der Status von Personen die Hautoberflächentemperatur der vom Raumnutzungszustand erfassten Personen umfasst und dass die Steuerungsvorrichtung die Heizungs-, Lüftungs- und/oder Klimavorrichtung so ansteuert, dass bei niedrigerer Hautoberflächentemperatur eine höhere Raumtemperatur eingestellt wird.

15. Verfahren zum Betreiben eines Heizungs-Lüftungs-Klimatechnik-Systems nach einem der Ansprüche 9 bis 14, **dadurch gekennzeichnet, dass** der Status von Personen die Bekleidungsoberflächentemperatur der vom Raumnutzungszustand erfassten Personen umfasst und dass die Steuerungsvorrichtung die Heizungs-, Lüftungs-und/oder Klimavorrichtung so ansteuert, dass bei niedrigerer Bekleidungsoberflächentemperatur eine niedrigere Raumtemperatur eingestellt wird.
